# EUROPEAN PATENT SPECIFICATION

(11) **EP 1 356 621 B1**
(45) Date of publication and mention of the grant of the patent: **07.11.2007**
(21) Application number: 02716140.5
(22) Date of filing: 22.01.2002
(51) Int. Cl.: H04J 14/02, H04Q 11/00

(54) **GROOMING OF CHANNELS IN WAVELENGTH DIVISION MULTIPLEXED OPTICAL COMMUNICATION SYSTEMS**
KANAL-GROOMING IN OPTISCHEN KOMMUNIKATIONSSYSTEMEN MIT WELLENLÄNGENMULTIPLEX
MISE EN FORME DE CANAUX DANS DES SYSTEMES DE COMMUNICATION OPTIQUE A MULTIPLEXAGE PAR REPARTITION EN LONGUEURS D'ONDES

(30) Priority: 24.01.2001 GB 0101787
(43) Date of publication of application: 29.10.2003
(73) Proprietor: Ericsson AB, Stockholm (SE)
(72) Inventor: ABBAS, Ghani Abdul Muttalib, Woaton, Nottingham NG8 2PX (GB)
(74) Representative: Collier, Ian Terry
(86) International application number: PCT/GB2002/000258
(87) International publication number: WO 2002/060105

(56) References cited:
- EP-A- 0 438 155
- EP-A- 0 729 247
- EP-A- 0 810 752
- BIGO S ET AL: "MULTI-TERABIT/S TRANSMISSION OVER ALCATEL TERALIGHTTM FIBER" ELECTRICAL COMMUNICATION, ALCATEL. BRUSSELS, BE, no. 4, 1 October 2000 (2000-10-01), pages 288-296, XP000976732 ISSN: 0013-4252

## Description

The present invention relates to a method of grooming channels in wavelength division multiplexed (WDM) optical communication systems. Moreover, the invention also relates to a WDM optical communication system utilizing the method.

Conventional optical communication systems comprise two or more nodes interconnected through optical fibre waveguides. Information is communicated between the nodes by modulating optical radiation, of substantially 1.3 µm to 1.5 µm free-space wavelength, with the information (communication traffic) and guiding the modulated radiation between the nodes as appropriate to convey the information. The optical radiation is conventionally partitioned into several wavelength bands, often termed wavelength channels, which are mutually independently modulatable with information. Optical communication systems employing such channels are referred to as wavelength division multiplexed (WDM) systems. When the frequency separation of channels approaches 100 GHz or less, the systems are referred to as dense WDM (DWDM) systems.

Contemporary optical communications systems are often configured with their respective nodes interconnected in ring formations, mesh formations or a mixture of ring and mesh formations. Moreover, the systems can convey radiation comprising 32 or more channels. For example, the PMA-32 product manufactured by Marconi Communications Ltd. is designed to convey between its nodes radiation comprising at least 32 channels.

In Japanese patent application No 8-163092 there is provided a method for allocation of wavelength channels in which the possible range of wavelength channels is limited to a part of the WDM wavelength spectrum because of the use of semiconductor lasers that have a wavelength tunable range of the order of several nanometers. This results in consolidation of the wavelength channels being limited to a single group of channels.

Many conventional optical WDM communication systems are to a certain extent reconfigurable, namely nodes of the systems can be instructed by associated network management systems to employ specific wavelength channels when emitting radiation therefrom and responding to radiation received thereat. In present systems, the approach to allocating channels at system nodes can be random which results in channel fragmentation. The present invention has been devised by the inventor to address such fragmentation.

Superficially, channel fragmentation would seem advantageous because channels are kept apart in frequency, and hence in wavelength, as much as possible to reduce effects such as intermodulation distortion and cross-talk within optical filters used in the nodes to isolate and separate radiation of the channels. In practice, the inventor has appreciated that channel fragmentation can give rise to one or more problems of channel control, channel protection and channel leveling; these problems will be further elucidated later.

The inventor has appreciated that it is highly beneficial to consolidate the channels together to bring them into an orderly sequence and preferably occupying a smaller overall radiation bandwidth.

Thus, according to the present invention, there is provided a method of allocating wavelength channels in a wavelength division multiplexed, WDM, optical communication system, the system comprising: a plurality of nodes interconnected by optical fibre guiding means for guiding communication traffic bearing WDM radiation between the nodes, the system being capable of supporting a plurality of possible wavelength channels for conveying communication traffic, each of the possible wavelength channels having a wavelength band which is centred about a respective fixed centre wavelength, the centre wavelengths being equally spaced over a continuous WDM wavelength spectrum, the method being characterised by allocating each of the wavelength channels to be currently used within the system to convey communication traffic from any of the possible plurality of wavelength channels supported by the system, such that the wavelength channels in use in the system are consolidated into one or more groups of used wavelength channels and wherein the or each of the groups can be at any part of the WDM wavelength spectrum.

A plurality of consolidated groups is beneficial when the communication system includes a considerable number of wavelength channels in use (active) in the system, for example 1000 active channels or more.

The method of grooming of wavelength channels provides one or more of the following advantages:
(a) system network management is simplified;
(b) channel leveling is easier to implement;
(c) system reconfiguration response time is improved because system optical filters need only be tuned over a relatively smaller wavelength range;
(d) tunable lasers within the system can be retuned more rapidly; and
(e) channel protection is easier to implement.

Consolidation in the context of the present invention is a technique for compressing the active wavelength channels (i.e. the wavelength channels currently being used to convey communication traffic), which could be spread over a relatively wide part of the WDM wavelength spectrum, into a relatively compact part of the spectrum. Moreover, consolidation of the active wavelength channels can be achieved in a number of different ways.

In one example, the active channels to be used, are allocated such as to consolidate them into groups which are at one or both extremes of WDM wavelength spectrum. Such consolidation is advantageous because it is easier to manage and convenient when implementing protection switching. As a first example, the channels are consolidated by allocating the wavelength channels to be used, such that they are consolidated into a group starting with the wavelength channel having the shortest centre wavelength. As a second example, the channels are consolidated by allocating the wavelength channels to be used, such that they are consolidated in a group starting from a wavelength channel having the longest centre wavelength.

Preferably, the method comprises allocating the wavelength channels to be used, such that one of the consolidated groups is consolidated at a central region of the WDM wavelength spectrum. Such central grouping results in the active channels being included near an optimal wavelength response range of system components such as erbium doped fibre optical amplifiers and filters.

Advantageously the method comprises allocating the wavelength channels to be used, such that the one or more consolidated groups comprises wavelength channels having centre wavelengths which are adjacent in wavelength.

Alternatively in some situations, for example to reduce potential cross-talk between wavelength channels, it is beneficial to allocate the wavelength channels to be used, such that the channels are consolidated in an interleaved manner.

To provide an enhanced reliability of communication, it is preferable that the optical fibre guiding means comprises a plurality of optical fibres configured to implement protection switching to provide alternative communication when a failure of one or fibres occurs.

According to a further aspect of the invention there is provided a wavelength division multiplexed communication system utilizing wavelength channels to convey communication traffic, the wavelength channels being consolidated according to the above method.

Embodiments of the invention will now be described, by way of example only, with reference to the following diagrams in which:
- Figure 1: is a schematic diagram of a conventional optical communication system comprising a plurality of system nodes interconnected through optical fibre waveguides in a ring formation and controllable from a network management system;
- Figure 2: is an illustration of components included within each of the nodes;
- Figure 3: is an example of conventional unconsolidated channel allocation within the system illustrated in Figure 1;
- Figure 4: is a first illustration of consolidated channel allocation according to the method of the invention;
- Figure 5: is a second illustration of consolidated channel allocation according to the method of the invention;
- Figure 6: is a third illustration of consolidated channel allocation according to the method of the invention;
- Figure 7: is a fourth illustration of consolidated channel allocation according to the method of the invention;
- Figure 8: is an illustration of two optical fibre waveguides for providing a premium quality of communication reliability in the system in Figure 1; and

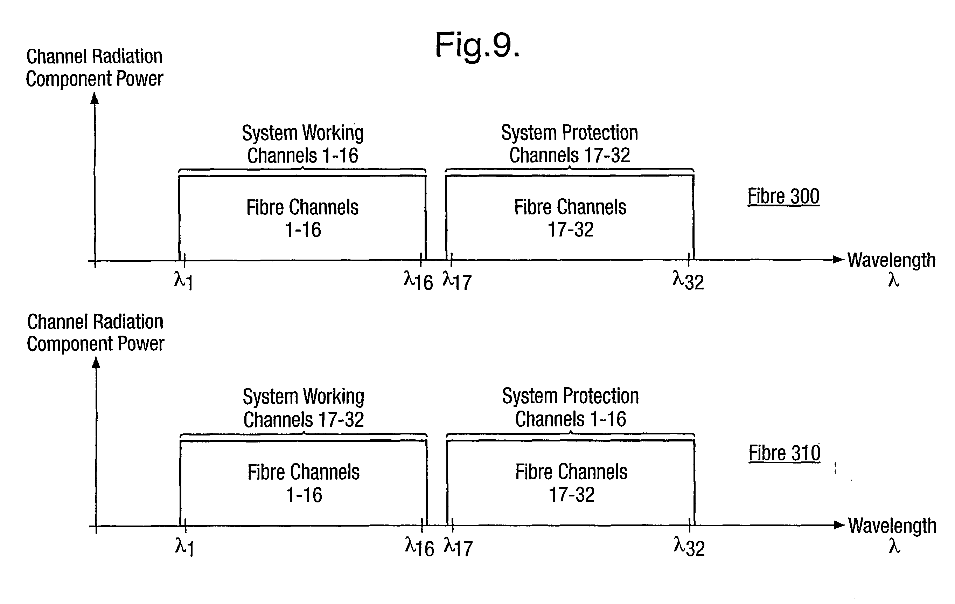

- Figure 9: is an illustration of working and protection channel allocation in the two waveguides in Figure 8.

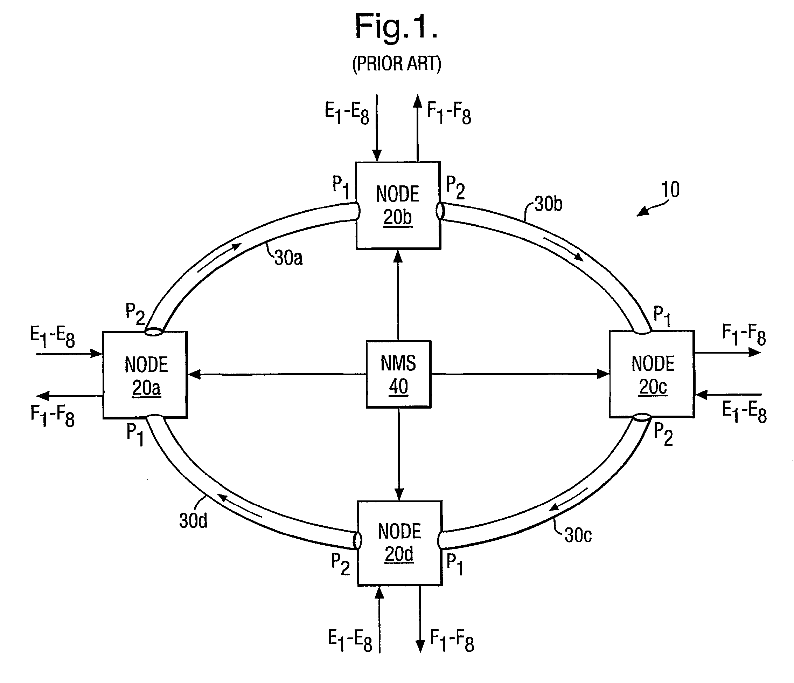

There is shown in Figure 1 a conventional optical communication system indicated generally by 10. The system 10 comprises a ring formation including first, second, third and fourth nodes denoted by 20a, 20b, 20c, 20d respectively; the nodes 20 are mutually identical with regard to their component parts. Moreover, the nodes 20a, 20b, 20c, 20d are connected by associated optical fibre waveguides 30a, 30b, 30c, 30d as shown. Furthermore, the system 10 includes a network management system (NMS) 40 which comprises four outputs, each output being connected to its respective node 20 for controlling node operation.

In operation, the nodes 20 communicate information as WDM radiation through the waveguides 30 around the ring formation; the nodes 20 are configured to receive communication traffic (E1 to E8) and output communication traffic thereat (F1 to F8), and convey the traffic through the waveguides 30 around the system 10 as directed by the NMS 40.

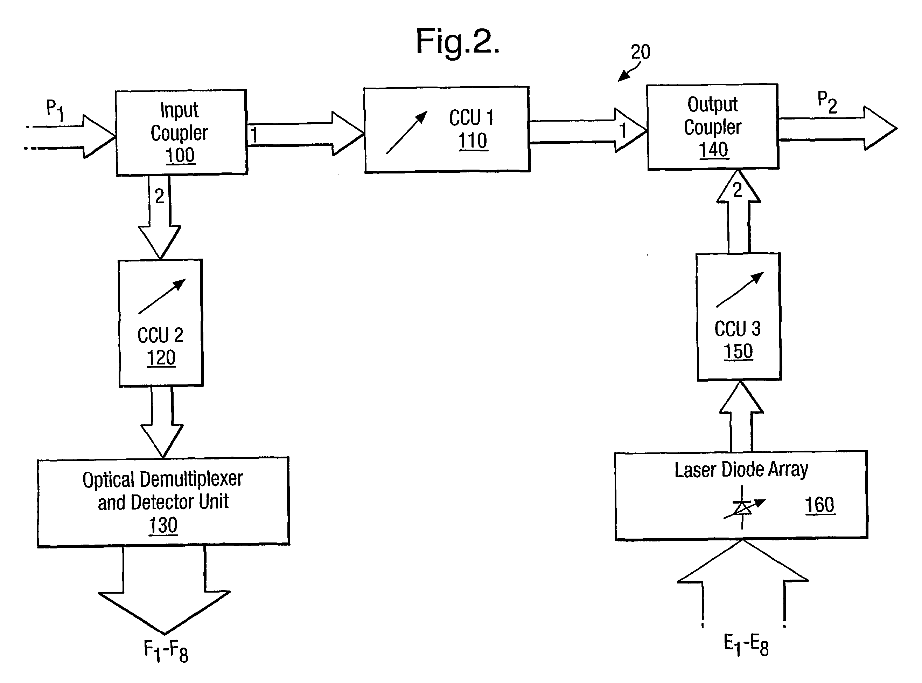

Component parts included within each node 20 and their mutual interconnection will now be described with reference to Figure 2.

Each node 20 comprises an optical input port P1, an optical output port P2, a series of electrical input ports E1 to E8 and a series of electrical output ports F1 to F8. The port P1 is connected to an optical input port of an input coupler 100. A first output port of the input coupler 100 is coupled to an input port of a first channel control unit (CCU1) 110, and a second output port of the coupler 100 is coupled to an input port of a second channel control unit (CCU2) 120. The CCU2 comprises an output port which is connected to an optical input port of an optical demultiplexer and detector unit 130. The detector unit 130 incorporates eight electrical outputs forming the output ports F1 to F8. An optical output port of the CCU1 is coupled to a first optical input port of an output coupler 140. A second optical input port of the output coupler 140 is connected to an optical output port of a third channel control unit (CCU3) 150. An optical output port of the output coupler 140 corresponds to the optical output port P2. The CCU3 comprises an optical input port which is connected to an optical output port of a tunable laser array and associated optical multiplexer unit 160. The multiplexer 160 includes eight electrical inputs corresponding to the input ports E1 to E8.

The CCU1, CCU2, CCU3 each comprise optical components for filtering input optical radiation received thereat into spatially separated raylets, each raylet corresponding to an associated channel. Each CCU also comprises an array of liquid crystal elements, each element associated with a corresponding raylet and hence a corresponding channel. The elements are individually controllable from the NMS 40 for purposes of controlling transmission through the elements and thus also reflection therefrom. Radiation transmitted through the array is recombined for providing output radiation.

Operation of the node 20 will now be described with reference to Figure 2.

WDM modulated optical radiation propagates to the input port P1 and therefrom into the input coupler 100 which couples a portion of the radiation to the CCU1. The CCU1 substantially transmits all the channels present in the radiation apart from one or more selected channels which the NMS 40 instructs the CCU1 to reflect. The CCU1 reflects radiation components corresponding to the selected channels back to the input coupler 100 and therethrough to the CCU2. The CCU2 is programmed by the NMS 40 to transmit the components to the detector unit 130. Tunable filters within the detector unit 130 individually isolate the radiation components received at the unit 130 and direct these components to respective optical radiation detectors or generating corresponding electrical signals thereat, each detector being associated with its corresponding electrical output port F.

Radiation components transmitted through the CCU1 propagate to the output coupler 140 through which they are transmitted to the optical output port P2. Electrical input signals received at the ports E1 to E8 are coupled under control of the NMS 40 to an array of eight tunable lasers for modulating one or more of the lasers. Optical outputs from the lasers are multiplexed to provide composite radiation which is output to the input port of the CCU3. The CCU3 transmits radiation components in the composite radiation corresponding to the channels which the CCU3 has been instructed from the NMS 40 to transmit. Output radiation from the CCU3 corresponding to the composite radiation propagates to the output coupler 140 which couples the output radiation to the optical output port P2.

It will be appreciated from the foregoing that the NMS 40 has considerable flexibility regarding how it allocates available channels within the system 10 to cope with communication traffic input and output from the nodes 20. In modulated radiation conveyed along the fibre waveguides 30, up to 32 channels at a channel wavelength spacing of 0.8 nm can for example be accommodated, each channel capable of conveying serial data at a rate of, for example, 2.5 Gbits/sec. It will be also be appreciated that future versions of the system 10 will be capable of coping with 1000 channels or more, each channel being upgradable to accommodated a data rate of 10 Gbits/sec.

Operation of the system 10 will now be described in further detail with reference to Figures 1 to 3 for an example situation where the NMS 40 allocates a non-consolidated distribution of channels for the nodes.

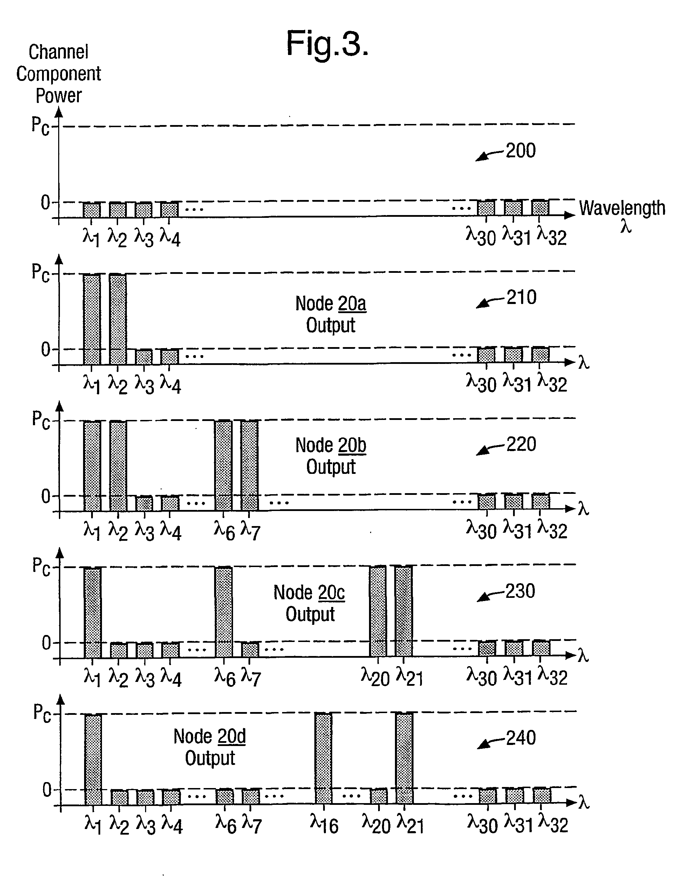

In Figure 3, a graph indicated by 200 represents 32 channels which can be accommodated within the system 10. The channels are each centred about a corresponding wavelength, for example channel 1 is centred about a centre wavelength λ₁, channel 2 is centred about a centre wavelength λ₂, and so on. The centre wavelengths λ₁ to λ₃₂ are arranged in frequency at a wavelength spacing of 0.8 nm. Moreover, the channels are arranged so that their sidebands do not overlap in frequency.

A graph indicated by 210 in Figure 3 corresponds to radiation output from the port P2 of the first node 20a. The NMS 40 instructs the first node 20a to modulate communication traffic received at two of the input ports E1 to E8 onto the channels 1 and 2 centred at wavelengths of λ₁ and λ₂ respectively and to output radiation components of these two channels as depicted in the graph 210.

The radiation output from the first node 20a is received at the port P1 of the second node 20b. The second node 20b is instructed by the NMS 40 to transmit channels 1 and 2. Moreover, the second node 20b is also instructed to add communication traffic received at its ports E1 to E8 and to modulate these onto channels 6 and 7 and add these to radiation output from the port P2 of the second node 20b. A graph indicated by 220 in Figure 3 corresponds to radiation output at the port P2 of the second node 20b. The radiation propagates along the optical fibre waveguide 30b to the optical input port of the third node 20c.

The NMS 40 instructs the third node 20c to drop channels 2 and 7 thereat and output the communication traffic of these channels at one or more of the ports F1 to F8 of the third node 20c. Moreover, the NMS 40 also instructs the third node 20c to modulate traffic received thereat onto channels 20 and 21. As channels 2 and 7 are dropped at the third node 20c, radiation components corresponding to these channels are not transmitted through to the output port P2 of the node 20c. Thus, radiation components corresponding to channels 1, 6, 20 and 21 are output from the third node 20c as depicted in a graph indicated by 230 in Figure 3.

Radiation output from the third node 20c into the fibre waveguide 30c propagates to the input P1 of the fourth node 20d whereat the radiation is received. The NMS 40 instructs the fourth node 20d to drop channels 6 and 20 and to output their communication traffic at one or more of the ports F1 to F8 of the node 20d. Moreover, the NMS 40 instructs the fourth node 20d to modulate traffic received at its input ports E1 to E8 onto channel 16 and add a radiation component corresponding to this channel to output radiation launched into the fibre waveguide 30d. Thus, the fourth node 20d transmits therethrough radiation components corresponding to channels 1, 21 and also adds the radiation component corresponding to channel 16. A graph indicated by 240 in Figure 3 provides a depiction of the radiation components output from the fourth node 20d towards the first node 20a of the ring formation.

It will be appreciated from Figure 3 that the NMS 40 selects a distribution of channels which is substantially random amongst the 32 channels available within the system 10. The inventor has appreciated that such a substantially random distribution is deleterious to overall system 10 operation. Indeed, the inventor has appreciated that there are considerable benefits derivable from consolidating active channels within the system 10. Some examples of consolidation will now be elucidated.

The consolidation of channels, namely the concentration of channels in wavelength and hence in frequency, would appear to one ordinarily skilled in the art as being undesirable. Consolidating channels would be expected to exacerbate inter-channel cross-talk and intermodulation effects and therefore be undesirable. Moreover, in the event of the waveguides 30 being subject to interference at specific wavelengths, spreading active channels in an unconsolidated manner across an available system bandwidth would be expected to make the system 10 more robust to such interference.

The inventor has appreciated that consolidating active channels together provides a number of benefits. For example, complexity of the NMS 40 is considerably simplified, especially with regard to its operating software. Moreover, channel leveling performed in the nodes 20 is simplified because the channels are grouped together and therefore in a specific part of the radiation spectrum depicted in Figure 3; channel leveling involves active adjustment of each channel's radiation power to mutually match the powers to circumvent "power hogging" effects in system components such as erbium doped fibre optical amplifiers (EDFAs). Furthermore, tunable filters within the nodes 20 are required to retune over a relatively smaller range therefore providing the system 10 with a faster reconfiguration response. Additionally, tunable lasers within the nodes 20 are required to tune over a nominally smaller range which also improves node response time when being reconfigured, for example where the lasers are thermally tuned; lasers tunable over a wider range tend to be less powerful than lasers designed to operate over a more limited range of wavelengths. Lastly, channel protection is also easier to organise and manage when the channels are consolidated.

As a first example, consolidating wavelengths according to the invention starting at channel 1 would require that:
(a) the first node 20a adds channels 1 and 2 via its CCU3 and output coupler 140 at a power level of P_{c} per channel;
(b) the second node 20b adds channels 3 and 4 via its CCU3 and output coupler 140, and transmits channels 1 and 2 through its CCU1 and output coupler 140;
(c) the third node 20c adds channels 5 and 6 via its CCU3 and output coupler 140, drops channels 2 and 4, and transmits channels 1 and 3 through its CCU1 and output coupler 140; and
(d) the fourth node 20d adds channel 7 through its CCU3 and output coupler 140, drops channels 3 and 5 and transmits channels 1 and 6 through its CCU1 and output coupler 140.

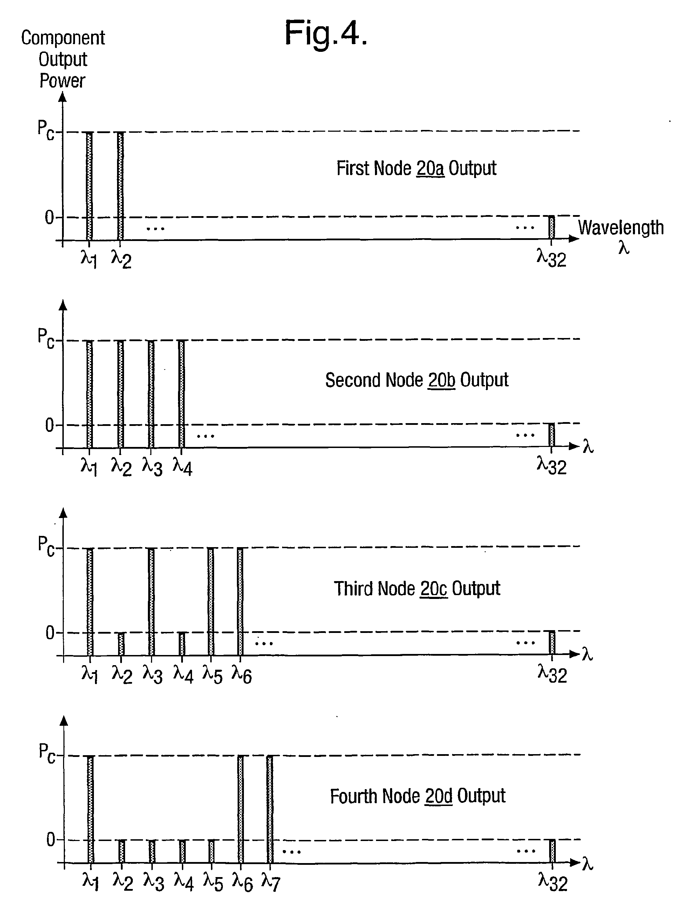

By such consolidation, only channels 1 to 7 are used in the system 10 leaving channels 8 to 32 unused. Such an allocation of channels is illustrated in Figure 4.

In the example in Figure 4, active channels are consolidated in a consecutive order upwards starting at channel 1. Other types of consolidation according to the invention are also possible.

As a second example, active channels can be consolidated according to the invention in a consecutive order downwards starting at channel 32, namely the highest number channel.

Consolidating wavelengths starting with channel 32 would require that:
(a) the first node 20a adds channels 31 and 32;
(b) the second node 20b adds channels 29 and 30 and transmits channels 31 ad 32;
(c) the third node 20c adds channels 27 and 28, drops channels 29 and 31, and transmits channels 32 and 30; and
(d) the fourth node 20d adds channel 26, drops channels 28 and 30 and transmits channels 32 and 27.

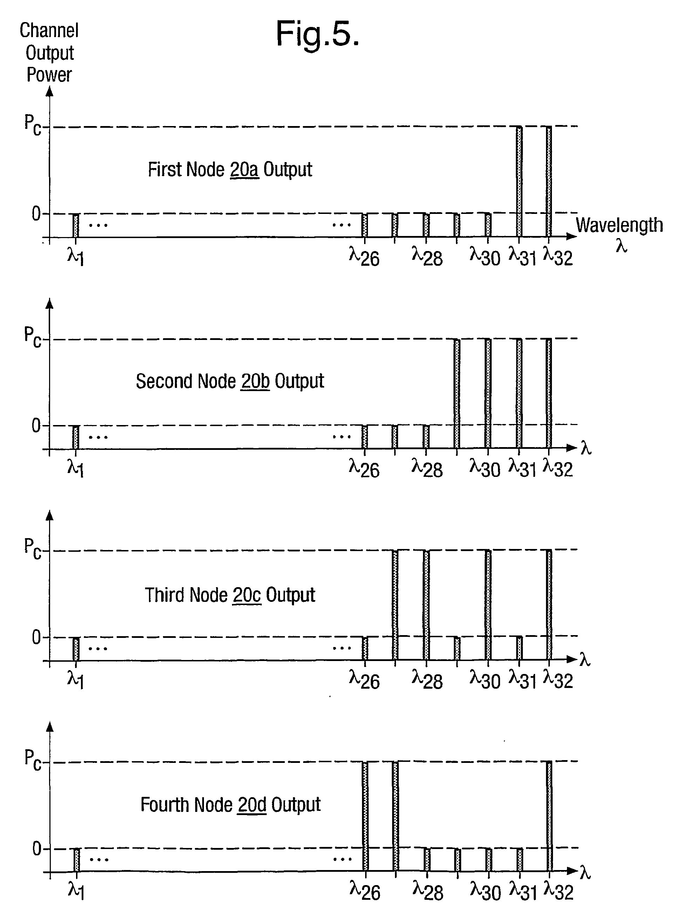

By such consolidation, only channels 26 to 32 are used in the system 10 leaving channels 1 to 25 unused. Such an allocation of channels is illustrated in Figure 5.

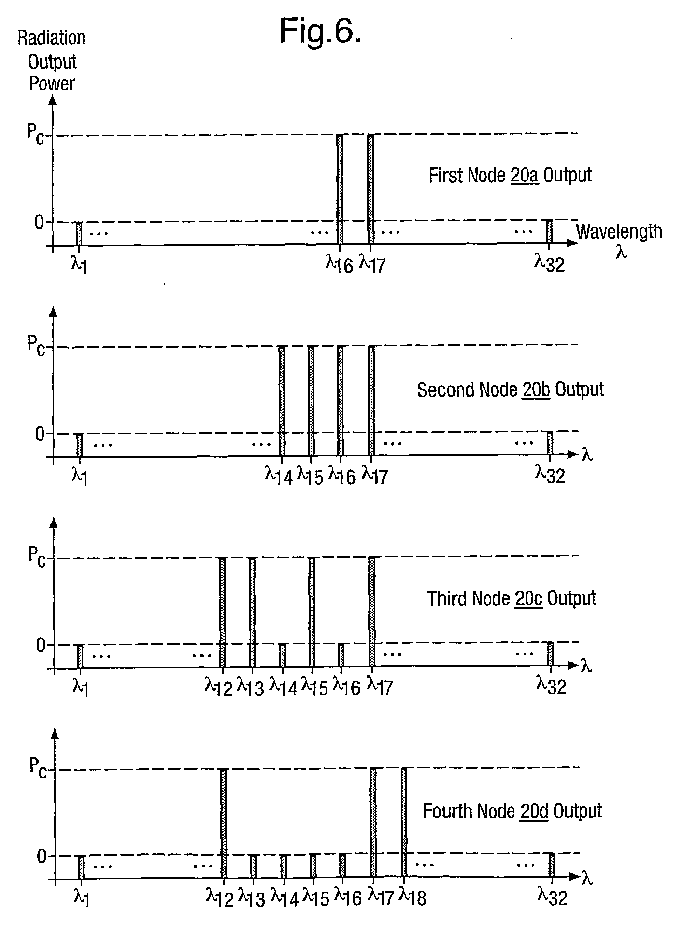

As a third example, active channels can be consolidated according to the invention in an order starting at channels 16, namely a middle number channel. Consolidating wavelengths starting with channel 16 would require that:
(a) the first node 20a adds channels 16 and 17;
(b) the second node 20b adds channels 14 and 15 and transmits channels 16 and 17;
(c) the third node 20c adds channels 12 and 13, drops channels 14 and 16 and transmits channels 15 and 17;
(d) the fourth node 20d adds channel 18, drops channels 13 and 15 and transmits channels 17 and 12.
   By such consolidation, only channels 12 to 18 are used in the system 10 leaving channels 1 to 11 and 19 to 32 unused. Such an allocation of channels is illustrated in Figure 6.

As a fourth example, active channels can be consolidated in an interleaved manner starting at channel 1. Interleaved consolidation starting with channel 1 would require that:
(a) the first node 20a adds channels 1 and 4;
(b) the second node 20b adds channels 2 and 5 and transmits channels 1 and 4;
(c) the third node 20c adds channels 3 and 6, drops channels 4 and 5 and transmits channels 1 and 2; and
(d) the fourth node 20d adds channel 7, drops channel 2 and 6 and transmits channels 1 and 3.

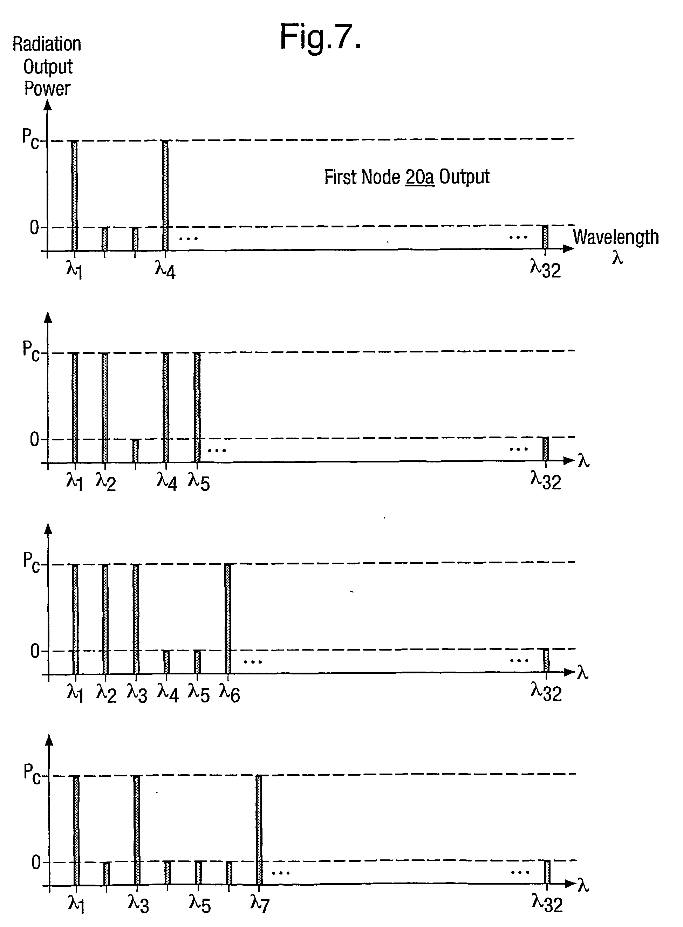

Such an allocation of channels is illustrated in Figure 7.

It will be further appreciated that the system 10 can, by appropriate choice of optical components in the nodes 20, be expanded to accommodate 1000 channels or more. In such an expanded system, channels can be simultaneously consolidated at several regions of the spectrum, for example at lowest channel numbers, at middle channel numbers and at high channel numbers. Moreover, if necessary, channel allocation can be interleaved at one or more of the lowest channel numbers, the middle channel numbers and the highest channel numbers. Furthermore, when consolidating, it will be appreciated that channels that are dropped at an earlier node in the ring formation can be reused at a later node in the formation without contention, thereby further consolidating the channels.

As an example of compact interleaved consolidation:
(a) the first node 20a adds channels 1 and 2, and drops channel 4;
(b) the second node 20b adds channels 3 and 4, and transmits channels 1 and 2;
(c) the third node 20c adds channels 5 and 6, drops channels 2 and 4, and transmits channels 1 and 3; and
(d) the fourth node 20d adds channel 4, drops channels 3 and 5 and transmits channels 1 and 6.

By such consolidation, only channels 1 to 6 are used in the system 10 leaving channels 7 to 32 unused.

It will be appreciated that the system 10 is only an example of a communication system in which the present invention can be implemented. It is equally applicable in systems comprising several ring formations, mesh formations, linear formations and also in systems comprising a mixture of these formations.

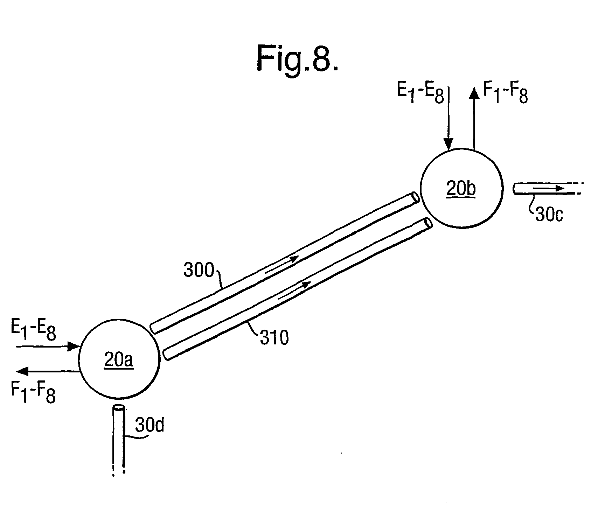

The invention is especially appropriate where a premium communication service is required. In Figure 8, the first and second nodes 20a, 20b of the system 10 are shown connected by first and second waveguides 300, 310. The waveguides 300, 310 function in tandem for conveying radiation from the first nodes 20a to the second node 20b. The two waveguides 300, 310 are preferably routed through separate ducts so that both waveguides are not simultaneous severed if one of the ducts is damaged, for example by fire.

The first node 20a is modified to output radiation to the two fibres 300, 310 and the second node 20b is accordingly adapted to receive radiation from the fibres 300, 310. Optical drivers and receivers at the two nodes 20a, 20b are configured to accommodate up to 32 channels in each of the fibres 300, 310. The nodes 20a, 20b are arranged to communicate up to 32 working channels of communication traffic therebetween, working channels 1 to 16 being conveyed in fibre channels 1 to 16 of the first fibre 300 and working channels 17 to 32 being conveyed in fibre channels 1 to 16 of the second fibre 310. There are also provided protection channels which can be invoked if either of the fibres 300, 310 become severed or otherwise disabled. The first fibre 300 channels 17 to 32 are used for providing protection channels for the working channels 17 to 32 normally conveyed along the second fibre 310. Likewise, the second fibre 310 channels 17 to 32 are used for providing protection channels for the working channels 1 to 16 normally conveyed along the first fibre 300.

The fibre channels of the two fibres 300, 310 are preferably allocated in a consolidated manner according to the invention. For example, when allocating working channels to convey traffic, working channel 1 is used first, working channel 2 is added if additional traffic is to be conveyed and so on. An interleaved approach to consolidation can alternatively or additionally be employed.

Consolidation eases considerably the task of protection performed by the NMS 40 in an event of one of the fibres 300, 310 becoming severed or otherwise disabled. In contrast, if information were distributed in a substantially random manner across the fibre channels, resolving channel switching in the event of a fibre break would be extremely complex and sometimes impossible for the NMS 40 to undertake. In future systems accommodating 1000 or more channels, mapping from working to protection channels becomes even more complex and potentially slows system recovery response time in the event of a fibre failure unless channel consolidation, and thereby optical grooming, according to the invention is utilized.

It will be appreciated that modifications can be made to the method of the invention without departing from the scope of the invention. Likewise, it will be appreciated that the system 10 described is only one example of a communication system where the invention can be applied; the invention is also applicable in other configurations of communication system.

## Claims

1. A method of allocating wavelength channels in a wavelength division multiplexed, WDM, optical communication system (10), the system comprising: a plurality of nodes (20a - 20d) interconnected by optical fibre guiding means (30a - 30d) for guiding communication traffic bearing WDM radiation between the nodes, the system being capable of supporting a plurality of possible wavelength channels for conveying communication traffic, each of the possible wavelength channels having a wavelength band which is centred about a respective fixed centre wavelength (λ₁- λ₃₂), the centre wavelengths (λ₁- λ₃₂) being equally spaced over a continuous WDM wavelength spectrum, the method comprising allocating each of the wavelength channels to be currently used within the system to convey communication traffic from any of the possible plurality of wavelength channels supported by the system, such that the wavelength channels in use in the system are consolidated into one or more groups of used wavelength channels and the method being **characterised in that** the or each of the groups can be at any part of the WDM wavelength spectrum.

2. A method according to Claim 1, and comprising allocating the wavelengths channels to be used, such as to consolidate them into groups which are at one or both extremes of the WDM wavelength spectrum.

3. A method according to Claim 2, and comprising allocating the wavelength channels to be being used, such that they are consolidated into a group starting with the wavelength channel having the shortest centre wavelength (λ₁).

4. A method according to Claim 2, and comprising allocating the wavelength channels to be used, such that they are consolidated in a group starting from a wavelength channel having the longest centre wavelength (λ₃₂).

5. A method according to Claim 1, and comprising allocating the wavelength channels to be used, such that one of the consolidated groups is consolidated at a central region (λ₁₆) of the WDM wavelength spectrum.

6. A method according to any preceding claim, and comprising allocating the wavelength channels to be used, such that the one or more consolidated groups comprises wavelength channels having centre wavelengths which are adjacent in wavelength.

7. A method according to any one of Claim 1 to 5, and comprising allocating the wavelength channels to be used, such that the channels are consolidated in an interleaved manner.

8. A wavelength division multiplexed communication system utilizing wavelength channels to convey communication traffic, the wavelength channels being consolidated according to the method as claimed in any preceding claim.

## Patentansprüche

1. Verfahren zum Zuweisen von Wellenlängenkanälen in einem optischen Kommunikationssystem mit Wellenlängenmultiplex (Wavelength Division Multiplexing, WDM) (10), wobei das System umfasst: mehrere Knoten (20a - 20d), die miteinander durch faseroptische Leitmittel (30a - 30d) zum Leiten von Kommunikationsverkehr transportierender WDM-Strahlung zwischen den Knoten verbunden sind, wobei das System in der Lage ist, mehrere mögliche Wellenlängenkanäle zum Transportieren von Kommunikationsverkehr zu unterstützen, wobei jeder der möglichen Wellenlängenkanäle ein Wellenlängenband aufweist, welches um eine jeweilige feste mittlere Wellenlänge (λ₁- λ₃₂) herum zentriert ist, wobei die mittleren Wellenlängen (λ₁- λ₃₂) gleiche Abstände über ein kontinuierliches WDM-Wellenlängenspektrum aufweisen, wobei das Verfahren das Zuweisen jedes der Wellenlängenkanäle, die gegenwärtig innerhalb des Systems verwendet werden sollen, um Kommunikationsverkehr zu transportieren, aus irgendwelchen der möglichen mehreren Wellenlängenkanäle, die von dem System unterstützt werden, umfasst, derart, dass die Wellenlängenkanäle, die in dem System in Verwendung sind, zu einer oder mehreren Gruppen von verwendeten Wellenlängenkanälen zusammengefasst sind, und wobei das Verfahren **dadurch gekennzeichnet ist, dass** die oder jede der Gruppen sich an einem beliebigen Teil des WDM-Wellenlängenspektrums befinden kann.

2. Verfahren nach Anspruch 1, welches außerdem das Zuweisen der zu verwendenden Wellenlängenkanäle umfasst, derart, dass sie zu Gruppen zusammengefasst werden, welche sich an einem oder an beiden Enden des WDM-Wellenlängenspektrums befinden.

3. Verfahren nach Anspruch 2, welches außerdem das Zuweisen der zu verwendenden Wellenlängenkanäle umfasst, derart, dass sie zu einer Gruppe zusammengefasst werden, die mit dem Wellenlängenkanal beginnt, der die kürzeste mittlere Wellenlänge (λ₁) aufweist.

4. Verfahren nach Anspruch 2, welches außerdem das Zuweisen der zu verwendenden Wellenlängenkanäle umfasst, derart, dass sie zu einer Gruppe zusammengefasst werden, die mit einem Wellenlängenkanal beginnt, der die längste mittlere Wellenlänge (λ₃₂) aufweist.

5. Verfahren nach Anspruch 1, welches außerdem das Zuweisen der zu verwendenden Wellenlängenkanäle umfasst, derart, dass eine der zusammengefassten Gruppen an einem mittleren Bereich (λ₁₆) des WDM-Wellenlängenspektrums zusammengefasst ist.

6. Verfahren nach einem der vorhergehenden Ansprüche, welches außerdem das Zuweisen der zu verwendenden Wellenlängenkanäle umfasst, derart, dass die eine oder die mehreren zusammengefassten Gruppen Wellenlängenkanäle umfassen, die mittlere Wellenlängen aufweisen, welche benachbarte Wellenlängen sind.

7. Verfahren nach einem der Ansprüche 1 bis 5, welches außerdem das Zuweisen der zu verwendenden Wellenlängenkanäle umfasst, derart, dass die Kanäle auf eine verschachtelte Art und Weise zusammengefasst werden.

8. Kommunikationssystem mit Wellenlängenmultiplex, in dem Wellenlängenkanäle benutzt werden, um Kommunikationsverkehr zu transportieren, wobei die Wellenlängenkanäle gemäß dem Verfahren nach einem der vorhergehenden Ansprüche zusammengefasst sind.

## Revendications

1. Procédé pour allouer des canaux de longueur d'onde dans un système de communication optique (10) à multiplexage par répartition en longueurs d'ondes, WDM, le système comprenant : une pluralité de noeuds (20a-20d) interconnectés par des moyens de guidage à fibre optique (30a-30d) pour guider du trafic de communication supportant un rayonnement WDM entre les noeuds, le système étant en mesure de supporter une pluralité de canaux de longueur d'onde possibles pour transporter du trafic de communication, chacun des éventuels canaux de longueur d'onde ayant une bande de longueur d'onde qui est centrée autour d'une longueur d'onde de centre fixe respective (λ1-λ₃₂), les longueurs d'ondes de centre (λ1-λ₃₂) étant espacées de manière égale sur un spectre de longueur d'onde WDM continu, le procédé étant **caractérisé en ce qu'**il consiste à allouer chacun des canaux de longueur d'onde à utiliser actuellement à l'intérieur du système afin de transporter le trafic de communication à partir de n'importe lequel de la pluralité éventuelle de canaux de longueur d'onde supportés par le système, de telle sorte que les canaux de longueur d'onde en utilisation dans le système soient consolidés en un ou plusieurs groupes de canaux de longueur d'onde utilisés et le procédé étant **caractérisé en ce que** le ou chacun des groupes peut se trouver à n'importe quelle partie du spectre de longueur d'onde WDM.

2. Procédé selon la revendication 1 et comprenant l'allocation des canaux de longueur d'onde à utiliser, de manière à les consolider en groupes qui sont à un ou aux deux extrêmes du spectre de longueur d'onde WDM.

3. Procédé selon la revendication 2 et comprenant l'allocation des canaux de longueur d'onde à utiliser, de telle sorte qu'ils soient consolidés en un groupe commençant par le canal de longueur d'onde ayant la longueur d'onde centrale la plus courte (λ₁).

4. Procédé selon la revendication 2 et comprenant l'allocation des canaux de longueur d'onde à utiliser, de telle sorte qu'ils soient consolidés en un groupe commençant par un canal de longueur d'onde ayant la longueur d'onde centrale la plus longue (λ₃₂).

5. Procédé selon la revendication 1 et comprenant l'allocation des canaux de longueur d'onde à utiliser, de telle sorte que un des groupes consolidés soit consolidé au niveau d'une région centrale (λ₁₆) du spectre de longueur d'onde WDM.

6. Procédé selon une des revendications précédentes et comprenant l'allocation des canaux de longueur d'onde à utiliser, de telle sorte que le ou les groupes consolidés comprennent des canaux de longueur d'onde ayant des longueurs d'ondes centrales qui sont adjacentes en longueur d'onde.

7. Procédé selon une quelconque des revendications 1 à 5 et comprenant l'allocation des canaux de longueur d'onde à utiliser, de telle sorte que les canaux soient consolidés d'une manière entrelacée.

8. Système de communication à multiplexage par répartition en longueurs d'ondes utilisant des canaux de longueur d'onde pour transporter du trafic de communication,les canaux de longueur d'onde étant consolidés conformément au procédé selon une quelconque des revendications précédentes.
